(19) **Europäisches Patentamt**

**European Patent Office**

**Office européen des brevets**

(11) **EP 0 669 585 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int. Cl.⁷: $G06F\ 17/17$

(21) Anmeldenummer: **95102305.0**

(22) Anmeldetag: **18.02.1995**

(54) **Iterativer Interpolator**

Iterative Interpolator

Interpolateur itératif

(84) Benannte Vertragsstaaten:
**DE FR GB NL**

(30) Priorität: **26.02.1994 DE 4406300**

(43) Veröffentlichungstag der Anmeldung:
**30.08.1995 Patentblatt 1995/35**

(73) Patentinhaber:
**Micronas Intermetall GmbH
79108 Freiburg (DE)**

(72) Erfinder:
• **Menkhoff, Andreas
D-79098 Freiburg (DE)**

• **Heberle, Klaus
D-79276 Reute (DE)**

(56) Entgegenhaltungen:
**EP-A- 0 624 847        GB-A- 1 536 844
US-A- 4 031 370**

• **FERREIRA P J S G: "ITERATIVE INTERPOLATION OF ECG SIGNALS" PROCEEDINGS OF THE ANNUAL INTERNATIONAL CONFERENCE OF THE ENGINEERI IN MEDICINE AND BIOLOGY SOCIETY, PARIS, OCT. 29 - NOV. 1, 1992, Bd. 14, 29.Oktober 1992, MORUCCI J P;PLONSEY R; COATRIEUX J L; SWAMY LAXMINARAYAN, Seiten 2740-2741, XP000347095**

**Beschreibung**

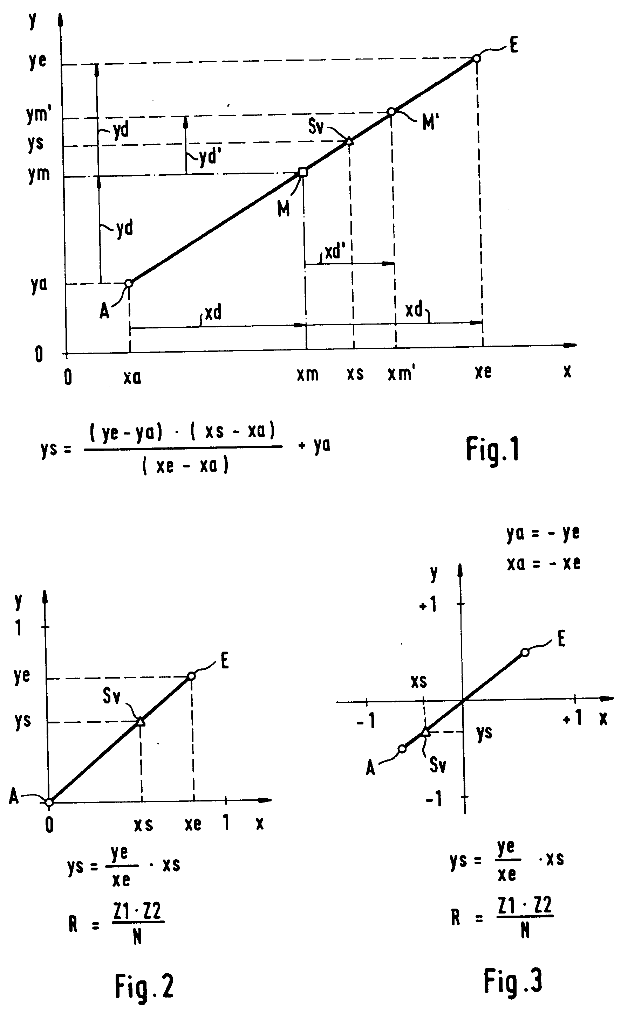

Die Erfindung betrifft einen iterativen Interpolator für eine lineare Interpolation zwischen Stützwerten. In vielen technischen Aufgaben ist es notwendig, zwischen zwei Punkten oder Stützwerten zu interpolieren. Die einfachste Art der Interpolation ist die lineare Interpolation, auch Geradeninterpolation genannt. Hierbei werden die zwei zu interpolierenden Punkte durch eine Gerade miteinander verbunden und der gesuchte Zwischenwert berechnet. Eine derartige Geradeninterpolation in der Ebene ist beispielsweise mit der zugehörigen Interpolationsformel in Fig. 1 dargestellt. Die Berechnung nach der dortigen Formel hat den Nachteil, daß sie relativ rechenaufwendig ist, sowie drei Subtraktionen und je eine Addition, Multiplikation und Division erfordert. Zur technischen Realisierung dieser Formel benötigt man daher neben mindestens einer Addier/Subtrahiereinrichtung noch zusätzlich einen relativ aufwendigen Multiplizierer und Dividierer. Selbstverständlich können diese Funktionseinheiten in Software- oder Hardwaretechnik oder gar in einer gemischten Form realisiert sein. Dies ist lediglich eine Frage der Organisation des jeweiligen Prozessors und der notwendigen Verarbeitungsgeschwindigkeit. Ein weiterer Nachteil bei der Berechnung nach der herkömmlichen Interpolationformel ist, daß das Zwischenergebnis nach der Multiplikation mit doppelter Genauigkeit und nach der anschließenden Division mit dreifacher Genauigkeit weiterverarbeitet werden muß, damit der Ausgangswert durch vorausgehende Stellen beschränkungen nicht ungenau oder gar falsch wird.

Aus der GB-A-1 536 844 sind iterative Interpolationsverfahren zur Generierung von Werten einer mathematischen Funktion auf der Basis von Polynomen bekannt. Die Polynomkoeffizienten der sukzessive höheren Potenzen von x werden dabei durch fortlaufende Teilung des Argumentbereichs und Vergleich mit den zu approximierenden Funktionswerten bestimmt.

Es ist daher Aufgabe der im Anspruch 1 gekennzeichneten Erfindung, einen verbesserten Interpolator für eine lineare Interpolation zwischen Stützwerten anzugeben, der ohne Multiplizierer und Dividierer für die einzelnen Koordinatenwerte auskommt.

Die Lösung dieser Aufgabe besteht nach den Merkmalen des Anspruchs 1 darin, daß der Interpolator mittels eines Intervallschachtelungsverfahrens eine Interpolation bezüglich des vorgegebenen Zwischenwertes in einer ersten Koordinatenrichtung durchführt und dieses Intervallschachtelungsverfahren auf eine zweite Koordinatenrichtung zur Auffindung des gesuchten Interpolationswertes überträgt. Der gesuchte Interpolationswert wird dabei durch einen Nährungswert ersetzt, wobei dessen Genauigkeit beliebig vorgebbar ist. Als einzige algebraische Funktionen sind dabei Additionen und/oder Subtraktionen und als Division einfache Stellenverschiebungen erforderlich. Bei der Verwendung von binärcodierten Dualzahlen bedeutet bekanntlich die Verschiebung um eine einzige Stelle, daß der Wert der jeweiligen Dualzahl entweder halbiert oder mit dem Faktor 2 multipliziert wird. Mit beiden Operationen kann eine Stellenerweiterung verbunden sein, so daß das Ausgangssignal eine höhere Auflösung oder Genauigkeit aufweist. Dies gilt auch für die Verwendung von Zweierkomplement-Dualzahlen. Bei diesem Zahlensystem vereinfachen sich auch die Addierer und Subtrahierer, weil die jeweilige Rechenoperation nur noch vom Vorzeichen der einzelnen Werte abhängig ist.

Die Erfindung und weitere Vorteile werden nun anhand der Figuren der Zeichnung näher erläutert:

Fig. 1 zeigt schematisch im Diagramm eine Geradeninterpolation im x/y-Koordinatensystem,

Fig. 2 und 3 betreffen spezielle Interpolationen zur Ermittlung von Verhältniswerten,

Fig. 4 zeigt einen mit Stützwerten angenäherten Funktionsverlauf,

Fig. 5 zeigt schematisch eine Interpolation in einem vierdimensionalen Koordinatensystem, wobei die vierte Dimension einer Zeitachse entspricht,

Fig. 6 zeigt schematisch als Blockschaltbild ein Ausführungsbeispiel des Interpolators nach der Erfindung,

Fig. 7 zeigt ein typisches Ablaufprogramm bisheriger Fuzzy-Prozessoren,

Fig. 8 zeigt schematisch ein Kennfeld für zwei Eingangsvariable mit zugehöriger Ausgangsgröße,

Fig. 9 zeigt ein einfaches Ausführungsbeispiel einer Steuer- oder Regelschaltung mit einem Interpolator nach der Erfindung und

Figuren 10, 11 und 12 zeigen schematisch Iterationen im 7-dimensionalen Raum.

In Fig. 1 ist die bekannte Geradeninterpolation in der Ebene mit der zugehörigen Interpolationformel dargestellt. Durch einen ersten und zweiten Stützwert A bzw. E mit den Koordinaten xa, ya bzw. xe, ye wird eine Gerade definiert, von der in Fig. 1 lediglich die zwischen A und E liegende Strecke dargestellt ist. Zwischen den Koordinatenwerten xa, xe liegt ein erster Zwischenwert xs, dessen zugehöriger y-Wert ys jedoch nicht bekannt ist. Beide Koordinatenwerte xs, ys definieren einen gesuchten Zwischenwert Sv, dessen Ort genau auf der zuvor definierten Geraden liegen soll.

Die Bestimmung des gesuchten Interpolationswertes ys ergibt sich aus der in Fig.1 angegebenen Formel, die aus der bekannten Geradengleichung abgeleitet ist. Ihre Berechnung erfordert die eingangs genannten Rechenoperationen.

Die Erfindung liefert unter Vermeidung der Multiplikation und Division einen einfachen Weg, um vom vorgegebenen ersten Zwischenwert xs zum gesuchten Interpolationswert ys zu gelangen. Die Erfindung erweist sich besonders vorteilhaft bei der Verwendung der üblichen Dualzahlen; eine Anpassung an andere Zahlensysteme ist jedoch ebenfalls möglich.

Die Lehre der Erfindung besteht darin, daß der gesuchte Interpolationswert ys durch einen Nährungswert ym' ersetzt wird, der mittels eines Intervallschachtelungsverfahrens gefunden wird.

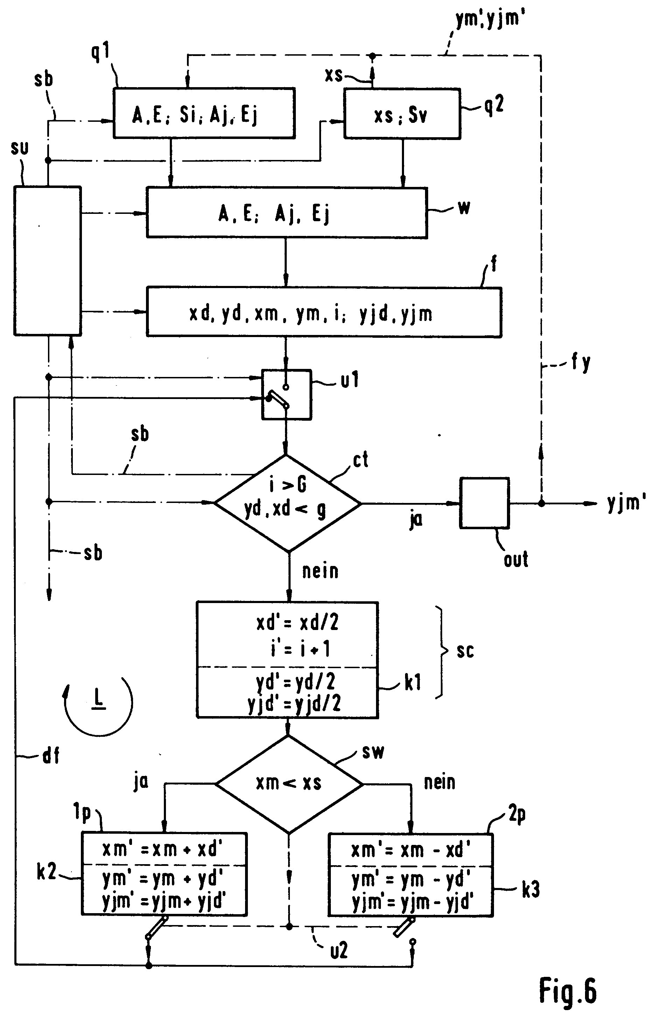

Als erster Schritt wird ein erster Nährungswert xm gebildet, in der Regel der Mittelwert zwischen den Koordinatenwerte xa und xe. Gleichzeitig mit der Bildung des ersten Nährungswertes xm wird ein erster Differenzwert xd gebildet, der dem Abstand des ersten Nährungswertes xm von den beiden Koordinatenwerten xa, xe entspricht. Nach der Bildung des ersten Nährungswertes xm und des ersten Differenzwertes xd in einer Initialisierungsstufe f wird im ersten Iterationszyklus geprüft, ob der erste Nährungswert xm größer oder kleiner als der erste Zwischenwert xs ist. Je nachdem wie dieser Vergleich ausfällt, wird zum ersten Nährungswert xm ein modifizierter Differenzwert xd' addiert oder subtrahiert, wobei der modifizierte Differenzwert xd' dem halben ersten Differenzwert xd entspricht. Die Halbierung erfolgt am einfachsten durch eine Stellenverschiebung des ersten Differenzwertes xd in LSB-Richtung. Durch die Kombination des ersten Nährungswertes xm und des modifizierten Differenzwertes xd' wird ein modifizierter erster Nährungswert xm' definiert, der im zweiten Iterationszyklus wieder mit dem ersten Zwischenwert xs verglichen wird. Für den zugehörigen Intervallschachtelungsschritt wird der aktuelle, also der modifizierte erste Differenzwert xd', wieder halbiert und dieser Wert zum modifizierten ersten Nährungswert xm' addiert oder subtrahiert, wodurch die Annäherung weiter verbessert wird. Diese Intervallschachtelung wird solange weitergeführt, bis entweder der jeweils aktuelle Differenzwert xd oder ein weiterer Differenzwert yd unter einen vorgegebenen Schwellenwert g fällt oder ein anderes Abbruchkriterium, z.B. eine vorgegebene Anzahl von Intervallschritten, erfüllt ist, (vgl. auch Fig. 6).

Diese Intervallschachtelung bewirkt, daß der erste Zwischenwert xs nicht mehr als genauer Wert, sondern als Nährungswert xm' angegeben wird, wobei die Genauigkeit der Näherung aber beliebig groß sein kann.

Dem ersten Nährungswert xm auf der x-Koordinate entsprechen auf der Strecke A, E ein Punkt M, der in der Regel der Mittelwert ist und auf der y-Koordinate ein zweiter Nährungswert ym. In gleicher Weise entsprechen jedem modifizierten ersten Nährungswert xm' ebenfalls ein modifizierter Punkt M' auf der Geraden und ein zweiter Nährungswert ym' in der zweiten Koordinatenrichtung y. In gleicher Weise, wie sich das Intervallschachtelungsverfahren in der ersten Koordinatenrichtung x immer mehr dem ersten Zwischenwert xs nähert, nähern sich auf der Geraden der modifizierte Punkt M' dem zu interpolierenden Zwischenwert Sv und in der zweiten Koordinatenrichtung y der zweite modifizierte Nährungswert ym' dem gesuchten Interpolationswert ys. Gemäß der Erfindung muß dabei sichergestellt sein, daß das Intervallschachtelungsverfahren der ersten Koordinatenrichtung x in gleicher Weise auf die zweite Koordinatenrichtung y übertragen wird. Als Ausgangswerte für diese Intervallschachtelung in y-Richtung wird ein zweiter Nährungswert ym gebildet, der entsprechend dem ersten Nährungswert xm in der Mitte zwischen dem zweiten Koordinatenwerten ya und ye liegt. Gleichzeitig wird ein zweiter Differenzwert yd gebildet, der dem Abstand des zweiten Nährungswertes ym von den beiden Koordinatenwerten ye und ya entspricht. Für die Intervallschachtelung in der zweiten Koordinatenrichtung y wird für jeden Intervallschritt der aktuelle zweite Differenzwert yd bzw. yd' halbiert und zum jeweiligen zweiten Nährungswert ym bzw. ym' addiert oder subtrahiert. Die Reihenfolge der Additionen oder Subtraktionen ist dabei beliebig, solange ihre Zuordnung zum Intervallschachtelungsverfahren in der ersten Koordinatenrichtung gewahrt bleibt. Am zweckmäßigsten wird das Intervallschachtelungsverfahren in beiden Koordinatenrichtungen x und y möglichst parallel ausgeführt, wodurch sich der Schaltungsaufwand für die Kopierung sehr klein halten läßt, vergleiche das Ausführungsbeispiel von Fig.6.

In Fig. 2 ist anhand eines speziellen Interpolationsfalles anschaulich dargestellt, daß ein Interpolator nach der Erfindung auch zur Berechnung eines Verhältniswertes    R = Z1 * Z2/N verwendet    werden kann. Wird bei dem Verhältniswert R ein geeigneter Faktor durch den Zahlenwert 1 ersetzt, dann entspricht dem Verhältniswert R eine reine Multiplikation oder eine reine Division zwischen zwei beliebig vorgebbaren Zahlenwerten. Der Interpolator kann damit vorteilhaft in digitalen Signalverarbeitungs-, Steuerungs- oder Regelschaltungen als Multiplizierer, Dividierer oder Verhältniswertbildner eingesetzt werden, wobei der erforderliche Schaltungsaufwand gegenüber den üblichen Lösungen sehr klein ist. Für diesen speziellen Anwendungsfall ist es vorteilhaft, wenn die zu verarbeitenden Zahlenwerte dem Betrag nach kleiner als 1 sind, weil dann die resultierenden Ergebnisse ebenfalls in diesem begrenzten Zahlenbereich bleiben. Das Diagramm von Fig. 2 gilt für Zahlenwerte, die im positiven Wertebereich zwischen 0 und +1 bleiben und das Diagramm Fig. 3 für Zahlenwerte im Wertebereich zwischen -1 und +1.

Im zweidimensionalen Koordinatensystem x, y von Fig. 2 hat der erste Stützwert A in beiden Richtungen die Koordinatenwerte 0. Der zweite Stützwert E hat die Koordinatenwerte xe und ye. Schließlich ist noch der erste Zwischenwert xs gegeben. Durch diese Vorgaben vereinfachen sich die Interpolationsformeln von Fig. 1 zu:

$$ys = ye * xs/xe.$$

Dies entspricht einem gesuchten Verhältniswert $R = Z1 * Z2/N$, wenn $ye = Z1$, $xe = N$ und $xs = Z2$ sind, wobei Z2 kleiner als N sein muß.

Wenn positive und negative Zahlenwerte zugelassen sind, dann ist der erste und zweite Stützwert A, E nach dem Koordinatenschema von Fig. 3 anzuordnen, damit der zu interpolierende Zwischenwert Sv zwischen den beiden Stützwerten A, E liegt. Die Lage der beiden Stützwerte ist dabei punktsymmetrisch zum Koordinatenursprung. Die Koordinatenwerte der beiden Stützwerte sind daher wie folgt vorzugeben: $xa = -xe$ und $ya = -ye$. Durch diese Vorgaben vereinfacht sich die Interpolationsformel von Fig. 1 zu:

$$ys = ye * xs/xe.$$

Dies entspricht einem gesuchten Verhältniswert $R = Z1 * Z2/N$, wenn $ye = -ya = Z1$, $xe = -xa = N$ und $xs = Z2$ sind, wobei der Betrag von Z2 kleiner als der Betag von N sein muß.

Wenn die zu verarbeitenden Zahlenwerte größer als die vorgegebenen Bereiche von Fig. 2 oder Fig. 3 sind, dann geht der Iteration zweckmäßigerweise eine Normierung voraus. Bei Dualzahlen wird dabei die größte Zahl und mit ihr alle anderen Zahlen um soviele Stellen verschoben, bis die größte Zahl innerhalb des gewünschten Bereiches liegt. Nach der Iteration wird mittels einer inversen Stellenverschiebung um die gleiche Anzahl der ursprüngliche Zahlenmaßstab wieder hergestellt.

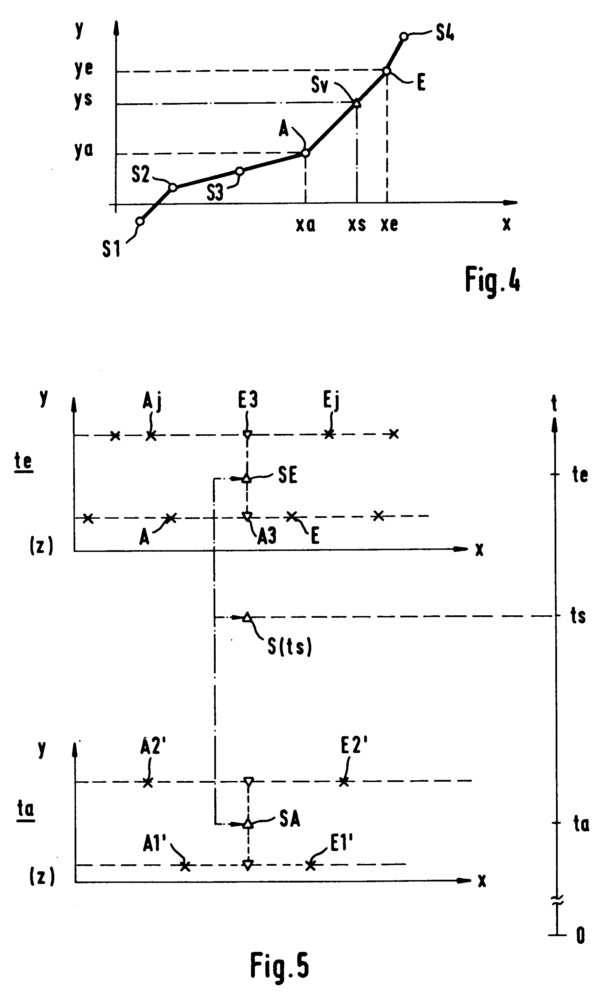

In Fig. 4 ist in einem zweidimensionalen Koordinatensystem x, y ein Kurvenverlauf dargestellt, der durch die Stützwerte S1, S2, S3, A, E und S4 definiert ist. Die erforderlichen Zwischenwerte sind dabei durch eine lineare Interpolation zwischen den jeweils benachbarten Stützwerten zu bestimmen. Als Beispiel ist der zu interpolierende Zwischenwert Sv eingezeichnet. Zu dem vorgegebenen x-Koordinatenwert xs soll der zugehörige y-Koordinatenwert ys bestimmt werden. Zunächst sind aus der Vielzahl von Stützwerten die unmittelbar benachbarten Stützwerte zu bestimmen, nämlich der erste Stützwert A und der zweite Stützwert E. Mit deren Koordinatenwerten wird dann die Interpolation nach der Erfindung durchgeführt.

In Fig. 5 ist schematisch ein vierdimensionales Koordinatensystem mit den Koordinatenrichtungen x, y, z, t dargestellt. Die Zeitachse t bildet dabei die vierte Koordinatenrichtung. Der obere und untere Teil von Fig. 5 zeigt jeweils die Aufsicht auf ein dreidimensionales Koordinatensystem x, y, z, mit den Projektionen der Stützwerte in der x/y-Ebene. Die als Kreuze dargestellten Stützwerte sind dabei zeilenweise in x-Richtung angeordnet. Eine spaltenweise Anordnung wäre ebenfalls zulässig - jedoch keine ungeordnete Verteilung.

Im oberen Teil von Fig. 5 ist der zu interpolierende Zwischenwert SE in x- und y-Richtung vorgegeben - in z-Richtung wird der zugehörige Interpolationswert gesucht. Zunächst werden die Nachbarstützwerte A, E, Aj, Ej gesucht und deren Koordinatenwerte in x- und y-Richtung bestimmt. Danach ist ein erster und ein zweiter Hilfsstützwert A3 bzw E3 zu interpolieren. Eine erste Interpolation in x-Richtung zwischen dem ersten und zweiten Stützwert A, E liefert den ersten Hilfsstützwert A3. Wegen der zeilenweisen Anordnung der Stützwerte in x-Richtung müssen die anfänglichen Interpolationen für die Hilfsstützwerte A3 und E3 ebenfalls in x-Richtung erfolgen. Bei einer spaltenweisen Anordung der Stützwerte müßten die Hilfsstützwerte in y-Richtung interpoliert werden. Eine zweite Interpolation in x-Richtung zwischen dem zweiten Stützwertpaar Aj, Ej liefert den zweiten Hilfsstützwert E3. Die beiden Hilfsstützwerte A3, E3 dienen nun als erster und zweiter Stützwert für eine weitere Interpolation, die nun in y-Richtung erfolgt. Durch lineare Interpolation zwischen dem ersten und dem zweiten Hilfsstützwert A3, E3 wird der zu interpolierende Zwischenwert SE gefunden. Entsprechend der Zeitachse t ist dieser Zwischenwert SE zum Zeitpunkt te definiert.

Im allgemeinen ist davon auszugehen, daß die Stützwerte im n-dimensionalen Koordinatensystem voneinander nicht unabhängig sind. Somit ist auch im angenommenen Beispiel von Fig. 5 die Lage der Stützwerte vom Zeitpunkt t abhängig.

Zum Zeitpunkt ta zeigt der untere Teil des Diagramms von Fig. 5 die Projektion einiger Stützwerte in der x/y-Ebene und zwar diejenigen Stützwerte, die dem zu interpolierenden Zwischenwert SA benachbart sind. Wenn dieser Zwischenwert SA gefunden ist, dann kann ein Zwischenwert S(ts) zum Zeitpunkt ts interpoliert werden. Dies ist in Fig. 5 durch eine strichpunktierte Linie veranschaulicht, die die beiden zu interpolierenden Hilfsstützwerte SE bzw. SA als Interpolationsgerade verbindet (die Gerade ist seitlich versetzt dargestellt) und den gesuchten Zwischenwert S(ts) enthält.

Zur Auffindung des gesuchten Zwischenwertes S(ts) im vierdimensionalen Koordinatensystem sind insgesamt sieben Interpolationen erforderlich. Im allgemeinen gilt, daß eine Interpolation im n-dimensionalen Koordinatensystem mittels $2^{(n-1)}-1$ Interpolationen in jeweils zweidimensionalen Koordinatensystemen durchgeführt werden kann. Der erforderliche Rechenaufwand läßt sich jedoch in erheblichem Maße reduzieren, wenn die Interpolation in hochdimensionalen Räumen durch eine Anzahl von parallel und/oder seriell durchgeführten Interpolationen in niederdimensionalen Räumen ersetzt werden kann. Die Ausgangswerte dieser niederdimensionalen Interpolationen bilden dabei Zwischenwerte Hi oder Hilfsstützwerte für die nachfolgenden Interpolationen, bis schließlich der gesuchte Ausgangswert S erhalten wird. Der geringste Rechenaufwand ergibt sich, wenn die n-dimensionale Interpolation in dreidimensionale Interpolationen zerlegt werden kann. Eine Zerlegung in niederdimensionale Räume ist natürlich nicht in allen Fällen möglich, Voraussetzung ist, daß die Eingangsvariablen Vi unterschiedlicher Interpolationsräume nicht voneinander oder von dritten Größen abhängig sind. In diesem Falle würde eine Trennung diese Abhängigkeit unterdrücken und das Ergebnis wäre fehlerhaft.

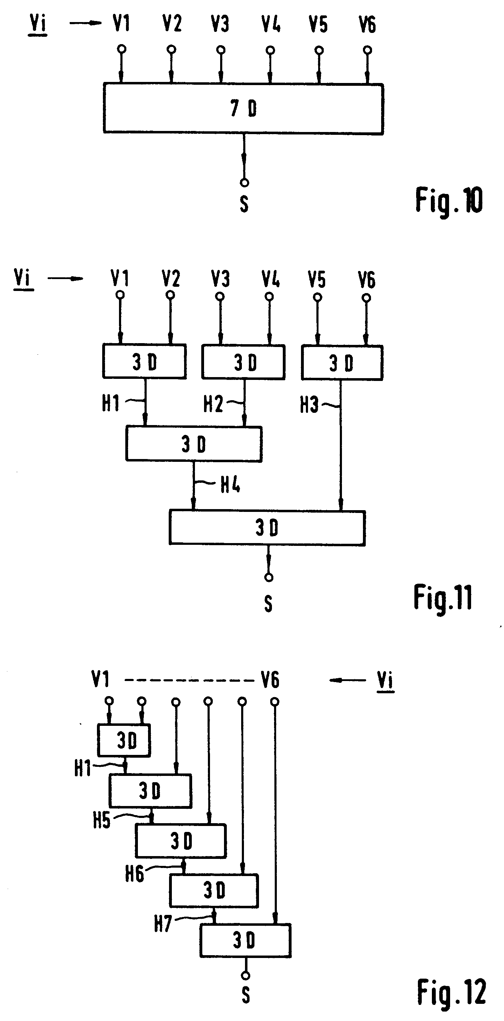

Zur Veranschaulichung wird in Fig. 10 eine Interpolation im 7-dimensionalen Raum schematisch dargestellt. Sie erfordert 63 zweidimensionale Interpolationen. Fig. 11 und 12 zeigen, wie diese Interpolationsaufgabe mit jeweils fünf Interpolationen in dreidimensionalen Räumen zerlegt werden kann, wobei Fig. 11 eine gemischte Parallel/Seriellzerlegung und Fig. 12 eine reine Seriellzerlegung darstellt. Jede Interpolation im dreidimensionalen Raum erfordert drei zweidimensionale Interpolationen. Damit sind mittels der Aufteilung in Fig. 11 oder Fig. 12 jeweils nur noch 15 zweidimensionale Interpolationen erforderlich. Die Anzahl Ad der zweidimensionalen Interpolationen bei der Zerlegung eines n-dimensionalen Raums in dreidimensionale Räume ergibt sich zu

$$Ad = (m - 2) * 3.$$

Je mehr Dimensionen die Iteration einschließt, desto effektiver wird die Zerlegung in niederdimensionale Räume. Beispielsweise erfordert ein 11-dimensionaler Raum schon 1023 zweidimensionale Iterationen. Bei der Zerlegung in dreidimensionale Räume reduziert sich die Anzahl zweidimensionaler Iterationen auf Ad = 27 .

Fig. 6 zeigt das Blockschaltbild eines erfindungsgemäßen Interpolators, der Interpolationen im zweidimensionalen Koordinatensystem ausführt. Dieser Interpolator ist als Grundeinheit auch für Interpolationen im n-dimensionalen Raum geeignet, weil diese, wie oben angegeben, immer in zweidimensionale Interpolationen zerlegt werden können.

Im Ausführungsbeispiel in Fig.6 liefert eine erste Quelle q1 eine Anzahl von Stützwerten A, E; Si; Aj, Ej, denen jeweils Koordinatenwerte in den einzelnen Koordinatenrichtungen zugeordnet sind. Eine zweite Quelle q2 liefert von dem oder den zu interpolierenden Zwischenwerten Sv die bekannten Koordinatenwerte, z.B. den ersten Zwischenwert xs. Die in der ersten und zweiten Quelle gespeicherten Koordinatenwerte werden einer Auswahlschaltung w zugeführt, die zum interpolierenden Zwischenwert Sv die benachbarten Stützwerte bestimmt, vgl. Fig.1. Die Auswahl erfolgt beispielsweise durch Differenzbildung der richtungsgleichen Koordinatenwerte der ersten und zweiten Quelle und deren Bewertung. Als Ergebnis liefert die Auswahlschaltung mindestens einen ersten und einen zweiten Stützwert A bzw. E, die dem ersten Zwischenwert xs benachbart sind. Gegebenenfalls können zu diesen Stützwerten A, B zussätzlich parallel liegende Stützwerte Aj, Ej bestimmt werden, um die Iteration in einem oder mehreren Bereichen durchzuführen, vergl. Fig. 5. Dies reduziert die Anzahl der unabhängigen Iterationen.

Mit der Auswahlschaltung w ist eine Initialisierungsstufe f gekoppelt, in der folgende Werte gebildet werden: Ein erster und zweiter Differenzwert xd bzw. yd, ein erster und zweiter Nährungswert xm bzw. ym und gegegenenfalls ein Schleifenzählwert i und die zusätzlichen Werte yjm und yjd. Der erste Differenzwert xd ist der halbe Abstand zwischen den ersten Koordinatenwerten xa, xe; der zweite Differenzwert yd ist der halbe Abstand zwischen den zweiten Koordinatenwerten ya, ye. Der erste Nährungswert xm liegt genau zwischen den ersten Koordinatenwerten xa, xe und der zweite Nährungswert ym zwischen den zweiten Koordinatenwerten ya und ye. Entsprechend werden gegebenenfalls die Werte yjm und yid des parallelen Bereichs j gebildet. Der Schleifenzählwert i wird auf den Wert 1 gesetzt.

Die in der Initialisierungsstufe f gebildeten Werte werden mittels eines elektronischen Umschalters u1 einer Abbruch-Erkennungsstufe ct zugeführt, die entweder den Schleifenzählwert i oder einen der Differenzwerte xd, yd mit einem Grenzwert G bzw. g vergleicht und bei Über- bzw. Unterschreitung die Iteration abbricht. Wird die Iteration nicht abgebrochen, dann werden die Ausgänge des Umschalters u1 mit einer Schrittweiten-Änderungseinrichtung sc verbunden. Dort wird durch einen Schiebevorgang der erste Differenzwert xd halbiert und gegebenenfalls der Schleifenzählwert i um eine Einheit erhöht. Mittels einer ersten Kopiereinrichtung k1 wird der zweite Differenzwert yd und gegebenenfalls der Wert yjd ebenfalls durch einen Schiebevorgang in seinem Wert halbiert. Eine Steuerweiche sw überprüft nun, ob der erste Nährungswert xm kleiner, größer oder gleich wie der erste Zwischenwert xs ist. Wie in den meisten Fällen der Signalverarbeitung ist es dabei gleichgültig, welcher Seite der Gleichheitswert zugeordnet wird. Wenn xm kleiner als xs ist, dann wird in einer ersten Approximationsstufe 1p ein erster modifizierter Nährungswert xm' gebildet, indem zum ersten Nährungswert xm der aktuelle erste Differenzwert xd' hinzuaddiert wird. Wie erinnerlich wurde in der Schrittweiten-Änderungseinrichtung sc dieser Wert xd' gegenüber dem ursprünglichen ersten Differenzwert xd halbiert. In einer zweiten Kopiereinrichtung k2 wird parallel dazu ein modifizierter zweiter Nährungswert ym' und gegebenenfalls yjm' gebildet, indem zum aktuellen zweiten Mittelwert ym bzw. yjm der aktuelle zweite Differenzwert yd' bzw. yjd' addiert wird. Ergibt sich aus dem Vergleich in der Steuerweiche sw, daß xm größer als xs ist, dann wird in einer zweiten Approximationsstufe 2p ein anderer erster modifizierter Nährungswert xm' gebildet, indem vom aktuellen ersten Nährungswert xm der aktuelle erste Differenzwert xd' abgezogen wird.

Mittels einer dritten Kopiereinrichtung k3 wird in ähnlicher Weise ein modifizierter zweiter Näherungswert ym' bzw. yjm' gebildet, indem die Differenz aus den aktuellen Werten ym-yd' bzw. yjm-yjd' gebildet wird.

Alle modifizierten Werte werden nun mittels einer Schleifenrückführungssleitung df und des elektronischen Umschalters u1 auf die Abruch-Erkennungsstufe ct zurückgeführt, wodurch eine Iterationsschleife L gebildet wird. Die Iterationsschleife L bleibt nun solange geschlossen und erhöht mit jedem Durchlauf die Genauigkeit der näherungsweise bestimmten Werte, bis das Abbruchkriterium erfüllt ist. In diesem Fall wird mittels einer Ausgangsstufe out der aktuelle Wert des modifizierten zweiten Nährungswertes ym' als gesuchter Interpolationswert ys ausgegeben. Mittels einer weiteren Rückführungsleitung fy kann dieser Wert in die erste Quelle q1 zusammen mit dem ersten Zwischenwert xs als Hilfsstützwert eingespeist werden, vergleiche Fig. 6. Bei jeden Schleifendurchlauf werden selbstverständlich die vorhandenen Näherungs- und Differenzwerte durch die verbesserten Werte in den entsprechenden Registern ersetzt.

Eine Steuereinrichtung su bewirkt die einzelnen Steuervorrichtungen und ist hierzu über bidirektionale Steuerleitungen sb mit den einzelnen Funktionsblöcken verbunden. Ein mit der Steuerweiche sw gekoppelter elektronischer Umschalter u2 kann auch mit der Steuereinrichtung su gekoppelt sein, wenn diese zuvor die entsprechenden Informationen erhält.

Die Quellen q1, q2 für die Stützwerte und die zu interpolierenden Zwischenwerte können ihrerseits Teil von anderen Signalverarbeitungsschaltungen sein. Denkbar sind, wie eingangs erwähnt, Steuer- oder Regelungsschaltungen mit vorgegebenen Steuer- oder Regelkennlinien. Der gesuchte Interpolationswert ys, in Fig. 6 durch den Wert ym' näherungsweise bestimmt, stellt dann den gewünschten Steuer- oder Regelwert, also das Stellsignal, dar.

Eine besonders vorteilhafte Anwendung des Interpolators nach der Erfindung ist die Kennlinien- bzw. Kennfeldinterpolation für Steuerfunktionen, insbesondere im Kraftfahrzeugsektor. Hier werden Kennlinien, Kennfelder oder Kennräume benutzt, um z. B. Schaltzeitpunkte bei Getriebesteuerungen oder Einspritzzeitpunkte und Einspritzmengen in der Motorelektronik zu bestimmen.

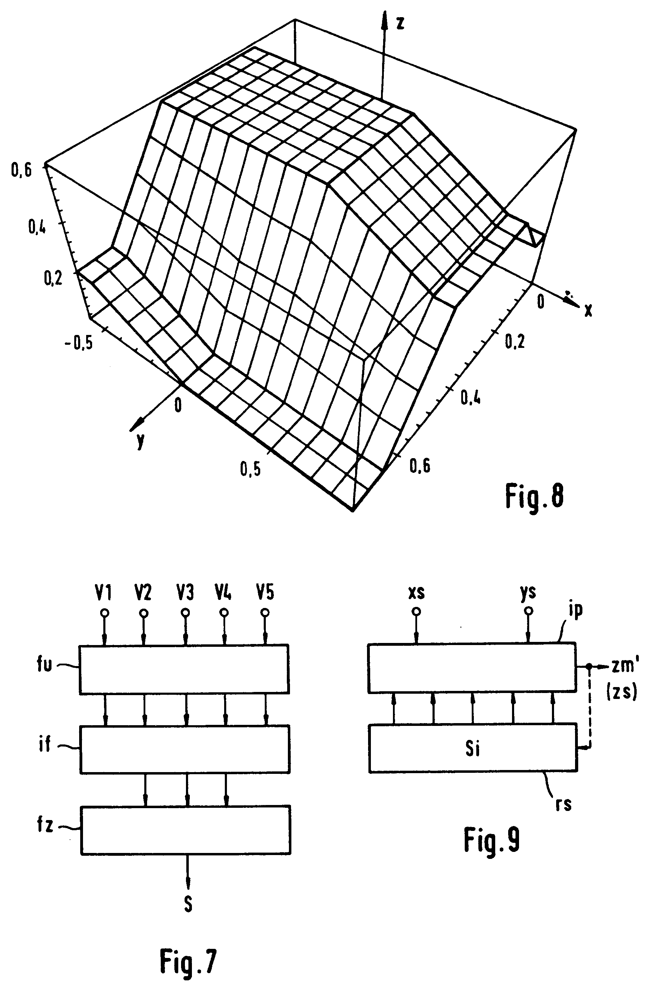

Die Interpolation im mehrdimensionalen Raum ist ferner von besonderem Interesse für die Verarbeitung von Fuzzy-Logiksystemen. Bisherige Systeme gehen dabei nach dem Schema von Fig. 7 vor. Beispielsweise wird eine Anzahl von Eingangsvariablen V1 bis V5 einem "Fuzzifier" fu zugeführt, der die Eingangsvariablen mit Hilfe linguistischer Operatoren "fuzzifiziert". Anschließend werden diese neu gewonnenen Werte mit Hilfe einer Rechenschaltung verarbeitet, d. h. zwischen den neu gewonnenen Werten werden in einem "Inferenzbildner" if die Inferenzen gebildet. Zuletzt muß dann aus den daraus gewonnenen Werten ein fester Ausgangswert berechnet werden. Dieser Schritt erfolgt in der Stufe "Defuzzifier" fz. Derartige Fuzzy-Systeme sind beispsielsweise in "Computertechnik", (abgekürzt: "c't"), 1991, Heft 3, Seiten 188 bis 206 beschrieben, wobei insbesondere Seite 199 eine komprimierte Einführung bietet.

Für ein bestehendes System werden die Eingangsvariablen mit Hilfe gleichbleibender "Fuzzy-Operatoren" immer auf dieselbe Art und Weise miteinander verknüpft. Für ein System mit zwei Eingangsvariablen xs, ys und einem Ausgangswert zs ergibt sich so eine dreidimensionale Fläche, wie sie in Fig. 8 näherungsweise zu sehen ist. Dort ist zu jedem Punkt in der x/y-Ebene, der durch den zugehörigen x- und y-Koordinatenwert definiert ist, eine zugehörige Ausgangsvariable in z-Koordinatenrichtung aufgetragen. Das gesamte Fuzzy-Logiksystem stellt somit eine Realisierung einer dreidimensionalen Fläche über den Eingangsvariablen xs und ys dar.

Diese dreidimensionalen Kennfläche ist in Fig. 8 näherungsweise durch ein Netz von Stützwerten dargestellt, wobei Zwischenwerte mittels eines Interpolators nach der Erfindung auf einfache Weise erhältlich sind. Anstatt der relativ aufwendigen Fuzzy-Operation führt eine Interpolation nach der Erfindung auf viel einfachere Weise zum gleichen Ergebnis. Die Realisierung des relativ komplizierten Steuer- oder Regelverhaltens, insbesondere bei Fuzzy-Logiksystemen erfordert bei der erfindungsgemäßen Interpolationslösung lediglich die Speicherung von relativ wenigen Stützpunkten in Verbindung mit einem iterativen Interpolator.

Die bei jedem Iterationsschritt vorgesehene Schrittweitenhalbierung hat zudem den Vorteil, daß die Näherungswerte nie aus dem vom ersten und zweiten Stützwert A, B gebildeten Wertebereich heraus laufen können - dies ergibt sich mathematisch aus der endlichen Reihensumme - woduch das Kennfeld weiter vereinfacht werden kann. Bleibt das Kennfeld in der jeweiligen Koordinatenrichtung für größere oder kleinere Werte konstant, dann sind in dieser Richtung keine weiteren Stützstellen erforderlich. Die erste und zweite Nachbarstützstellen A bzw. B können dann identisch sein, wodurch die Iteration sofort abgebrochen wird. Es ist aber auch möglich, daß die letzte und vorletzte Stützstelle zur Eingangsvariablen xs als Nachbarstützstellen A, B ausgewählt werden, weil dann durch die endliche Reihensumme der vom ersten Nährungswert xm ausgehenden Intervallschachtelung der letzte Stützwert ebenfalls nicht überschritten werden kann. Das Abbruchkriterium muß dann ein Schleifenzählwert G sein,

$$\text{da auch hier } xa < xm' < xe \text{ gilt.}$$

Fig. 9 zeigt schließlich die Vereinfachung eines Steuer- , Regel- oder Fuzzy-Systems mit zwei Eingangsvariablen xs und ys. Die zugehörige Ausgangsgröße zs wird durch den Nährungswert zm' ersetzt, der vom Interpolartor ip gebildet wird. Es liegt somit ein dreidimensionales Kennfeld x, y, z vor, das ähnlich wie in Fig. 8 aussehen könnte. Die zugehörigen Stützwerte Si, die netzförmig angeordnet sind, werden einem Stützwertspeicher rs entnommen. Dort sind zu jedem Stützwert Si die zugehörigen Koordinatenwerte in den drei Koordinatenrichtungen x, y, z festgehalten.

**Patentansprüche**

1.  Iterativer Interpolator für eine lineare Interpolation zwischen Stützwerten (A, E; Si) mit

    -   einer ersten Quelle (q1) zur Lieferung von Daten für die Stützwerte, die durch ein n-dimensionales Koordinatensystem definiert sind,
    -   einer zweiten Quelle (q2) zur Lieferung von Koordinatenwerten eines zu interpolierenden Zwischenwertes (Sv),
    -   einer Auswahlschaltung (w), die bezüglich des Zwischenwertes (Sv) die Koordinatenwerte der unmittelbar benachbarten Stützwerte, die mindestens einen ersten und einen zweiten Stützwert (A bzw. E) umfassen, bestimmt und diese Koordinatenwerte und die Koordinatenwerte (xs) des Zwischenwertes (Sv) einer Initialisierungsstufe (f) zuführt,
    -   einer Iterationsschleife (L), die mit der Initialisierungsstufe (f) gekoppelt ist und in einer ersten Koordinatenrichtung (x) eine Intervallschachtelung bezüglich des Zwischenwertes (Sv) mittels eines ersten Näherungswertes xm durchführt, wobei die Iteration zwischen ersten Koordinatenwerten (xa bzw. xe) des ersten und zweiten Stützwertes (A, E) erfolgt und einen modifizierten ersten Näherungswert (xm') liefert, und
    -   eine Kopiereinrichtung (k1, k2, k3), die das in der ersten Koordinatenrichtung (x) durchgeführte Intervallschachtelungsverfahren linear auf einen Koordinatenabschnitt in einer zweiten Koordinatenrichtung (y) überträgt, der durch zweite Koordinatenwerte (ya bzw. ye) des ersten und zweiten Stützwertes (A, E) definiert ist, wobei ein modifizierter zweiter Näherungswert (ym') beim Erreichen eines Abbruchkriteriums als gesuchter Interpolationswert (ys) mittels einer Ausgangsstufe (out) abgegeben wird.

2.  Interpolator nach Anspruch 1, bei dem die Initialisierungsstufe (f) dadurch gekennzeichnet ist, daß sie

    -   aus den ersten und zweiten Koordinatenwerten (xa, xe bzw. ya, ye) des ersten und zweiten Stützwertes (A bzw. E) einen ersten Differenzwert (xd) und einen zweiten Differenzwert (yd) bildet, wobei insbesondere der erste Differenzwert $xd = (xe - xa)/2$ sowie der zweite Differenzwert $yd = (ye - ya)/2$ sind, und xa kleiner als xe ist,

    -   den ersten Nährungswert (xm) insbesondere mittels folgender Beziehung $xm = xa + xd$ bildet, und
    -   aus den zweiten Koordinatenwerten (ya bzw. ye) des ersten und zweiten Stützwertes (A, E) einen zweiten Nährungswert (ym) bildet, wobei insbesondere $ym = ya + yd$ ist.

3.  Interpolator nach Anspruch 1 oder 2, gekennzeichnet durch folgende Merkmale:

    -   der gesuchte Interpolationswert (ys) entspricht einem gesuchten Verhältniswert R mit $R = Z1 * Z2/N$ , wenn

        -- das Koordinatensystem zweidimensional ist und
        -- der erste Stützwert (A) durch den ersten und zweiten Koordinatenwert $xa = O$ bzw $ya = O$ , der zweite Stützwert (E) durch den ersten und zweiten Koordinatenwert $xe = N$ bzw. $ye = Z1$ und der zu interpolierende Zwischenwert (Sv) in der ersten Koordinatenrichtung x durch den ersten Zwischenwert $xs = Z2$ definiert sind, und
        -- die ersten und zweiten Koordinatenwerte jeweils größer/gleich O sind.

4.  Interpolator nach Anspruch 1 oder 2, gekennzeichnet durch folgende Merkmale:

    -   der gesuchte Interpolationswert (ys) entspricht einem gesuchten Verhältniswert R mit $R = Z1 * Z2/N$ , wenn

        -- das Koordinaltensystem zweidimensional ist,
        -- der erste Stützwert (A) durch den ersten und zweiten Koordinatenwert $xa = -N$ bzw $ya = -Z1$ , der zweite Stützwert (E) durch den ersten und zweiten Koordinatenwert $xe = +N$ bzw. $ye = +Z1$ und der zu interpolierende Zwischenwert (Sv) in der ersten Koordinatenrichtung x durch den ersten Zwischenwert $xs = +Z2$ definiert sind, und
        -- die ersten und zweiten Koordinatenwerte mindestens teilweise negativ sind.

5.  Interpolator nach Anspruch 1 oder 2, dadurch gekennzeichnet, daß er in einer Steuer- oder Regelschaltung, insbesondere in einem Fuzzy-Logiksystem, der Zuordnung von n-1 Eingangsvariablen (xs, ys) zu einer Ausgangsvariablen (zm') dient, indem die Steuer- oder Regelcharakteristik mittels einer Vielzahl von Stützwerten (Si) in einem n-dimensionalen Koordinatensystem definiert ist, wobei jeder der n-1 Eingangsvariablen (xs, ys) sowie der Ausgangsvariablen (zm') eine Koordinatenrichtung (x, y, z) zugeordnet ist und die erforderlichen Zwischenwerte zwischen den Stützwert-Koordinatenwerten linear interpoliert werden.

6. Interpolator nach einem der Ansprüche 1, 2 oder 5, gekennzeichnet durch folgende Merkmale:

- die n-1 Koordinatenwerte des zu interpolierenden Zwischenwertes (Sv), die auch als Eingangsvariablen (Vi) bezeichnet werden, werden in Gruppen aufgeteilt, um jeweils eine niederdimensionale Interpolation, insbesondere eine dreidimensionale, mit den Koordinatenwerten einer Gruppe durchzuführen, wobei in jeder niederdimensionalen Interpolation die erforderlichen Interpolationen zweidimensional ausgeführt werden,
- die Ausgangswerte dieser niederdimensionalen Interpolationen bilden Zwischenwerte (Hi) oder Hilfsstützwerte für die nachfolgenden niederdimensionalen Interpolationen und
- der Ausgang des in Signalflußrichtung letzten Interpolators liefert den gesuchten Ausgangswert (S) in der Koordinatenrichtung n.

**Claims**

1. An iterative interpolator for linear interpolation between known values (A, E; Si), comprising

- a first source (q1) for supplying data for the known values, which are defined by an n-dimensional coordinate system,

- a second source (q2) for supplying coordinate values of an intermediate value (Sv) to be interpolated,

- a selection circuit (w) which determines the coordinate values of the known values adjacent to the intermediate value (Sv), said adjacent known values comprising at least one first known value (A) and one second known value (E), and which feeds said coordinate values and the coordinate values (xs) of the intermediate value (Sv) to an initialization stage (f),

- an iteration loop (L) which is coupled to the initialization stage (f) and carries out, in a first coordinate direction (x), an interval nesting process with respect to the intermediate value (Sv) by means of a first approximate value (xm), the iteration being performed between first coordinate values (xa, xe) of the first and second known values (A, E) and providing a modified first approximate value (xm'), and

- a copying device (k1, k2, k3) which linearly transfers the interval nesting process carried out in the first coordinate direction (x) to a coordinate section in a second coordinate direction (y), which coordinate section is defined by second coordinate values (ya, ye) of the first and second known values (A, E), a modified second approximate value (ym') being output as the required interpolation value (ys) via an output stage (out) when a breakoff criterion is reached.

2. An interpolator as claimed in claim 1 wherein the initialization stage (f) is characterized in that it forms

- a first difference value (xd) and a second difference value (yd) from the first and second coordinate values (xa, xe; ya, ye) of the first and second known values (A; E), with the first difference value xd being preferably equal to $(xe - xa)/2$, the second difference value yd being preferably equal to $(ye - ya)/2$, and xa being preferably less than xe,

- the first approximate value (xm) particularly by means of the following relationship: $xm = xa + xd$, and

- a second approximate value (ym) from the second coordinate values (ya, ye) of the first and second known values (A, E), with ym being preferably equal to $ya + yd$.

3. An interpolator as claimed in claim 1 or 2, characterized by the following features:

- The required interpolation value (ys) is equal to a required ratio R, with $R = Z1 * Z2/N$ if

-- the coordinate system is two-dimensional, and

-- in the first coordinate direction (x), the first known value (A) is defined by the first and second coordinate values $xa = O$ and $ya = O$, the second known value (E) by the first and second coordinate values $xe = N$ and $ye = Z1$, and the intermediate value (Sv) to be interpolated by the first intermediate value $xs = Z2$, and

-- the first and second coordinate values are greater than or equal to O.

**4.** An interpolator as claimed in claim 1 or 2, characterized by the following features:

- The required interpolation value (ys) is equal to a required ratio R, with R = Z1 * Z2/N if

    -- the coordinate system is two-dimensional,

    -- in the first coordinate direction (x), the first known value (A) is defined by the first and second coordinate values xa = -N and ya = -Z1 , the second known value (E) by the first and second coordinate values xe = +N and ye = +Z1 , and the intermediate value (Sv) to be interpolated by the first intermediate value xs = +Z2 , and

    -- the first and second coordinate values are at least partly negative.

**5.** An interpolator as claimed in claim 1 or 2, characterized in that it is used in a control circuit, particularly in a fuzzy logic system, to assign n-1 input variables (xs, ys) to an output variable (zm'), and that to this end, the control charcteristic is defined by a multitude of known values (Si) in an n-dimensional coordinate system, with each of the n-1 input variables (xs, ys) and the output variable (zm') assigned one coordinate direction (x, y, z), and the necessary intermediate values between the known value coordinate values being interpolated linearly.

**6.** An interpolator as claimed in claim 1, 2, or 5, characterized by the following features:

- The n-1 coordinate values of the intermediate value (Sv) to be interpolated, which are also referred to as input variables (Vi), are divided into groups to carry out a low-dimensional interpolation, particularly a three-dimensional one, with the coordinate values of a group, the necessary interpolations in each low-dimensional interpolation being performed two-dimensionally;

- the output values of this low-dimensional interpolation form intermediate values (Hi) or auxiliary known values for the subsequent low-dimensional interpolations, and

- the output of the last interpolator in the direction of signal flow provides the required output value (S) in the coordinate direction n.

**Revendications**

**1.** Interpolateur à itération pour une interpolation linéaire entre des valeurs de base (A, E ; Si) comportant :

- une première source (q1) pour la délivrance de données pour les valeurs de base qui sont définies au moyen d'un système de coordonnées à n dimensions,
- une deuxième source (q2) pour la délivrance de valeurs de coordonnées d'une valeur intermédiaire (Sv) à interpoler,
- un circuit de sélection (w) qui, en ce qui concerne la valeur intermédiaire (Sv), détermine les valeurs de coordonnées des valeurs de base directement voisines qui comprennent au moins une première et une deuxième valeurs de base (A, respectivement E) et envoie ces valeurs de coordonnées et les valeurs de coordonnées (xs) de la valeur intermédiaire (Sv) à un étage d'initialisation (f),
- une boucle d'itération (L) qui est coupée avec l'étage d'initialisation (f) et réalise, dans une première direction de coordonnées (x), un emboîtement d'intervalles concernant la valeur intermédiaire (Sv) au moyen d'une première valeur appliquée (xm), l'itération entre les premières valeurs de coordonnées (xa, respectivement xe) des première et deuxième valeurs de base (A, E) étant réalisée et délivrant une première valeur appliquée (xm') modifiée, et
- un dispositif de copie (k1, k2, k3) qui transmet de manière linéaire le procédé d'emboîtement d'intervalles réalisé dans la première direction de coordonnées (x) à une section de coordonnées qui est disposée dans une deuxième direction de coordonnées (y) et qui est définie par des deuxièmes valeurs de coordonnées (ya, respectivement ye) des première et deuxième valeurs de base (A, E), une deuxième valeur appliquée (ym') modifiée étant délivrée en tant que valeur d'interpolation recherchée (ys) au moyen d'un étage de sortie (out) lorsque l'on atteint un critère de suspension.

**2.** Interpolateur selon la revendication 1, dans lequel l'étage d'initialisation (f) est caractérisé en ce que :

- il forme, à partir des premières et deuxièmes valeurs de coordonnées (xa, xe, respectivement ya, ye) des première et deuxième valeurs de base (A, respectivement E), une première valeur de différence (xd) et une deuxième valeur de différence (yd), la première valeur de différence étant égale à, en particulier, xd = (xe - xa)/2 ainsi que la deuxième valeur de différence étant égale à, en particulier, yd = (ye - ya)/2 , xa étant plus petit que xe,
- il forme la première valeur appliquée (xm) au moyen de la relation suivante xm = xa + xd et

- il forme, à partir des deuxièmes valeurs de coordonnées (ya, respectivement ye) des première et deuxième valeurs de base (A, E), une deuxième valeur appliquée (ym), avec, en particulier, la relation ym = ya + yd.

3. Interpolateur selon la revendication 1 ou 2, caractérisé par les caractéristiques suivantes :

   - la valeur d'interpolation recherchée (ys) correspond à une valeur de rapport recherchée R, avec R = Z1 * Z2/N , lorsque :

     -- le système de coordonnées est à deux dimensions et

     -- la première valeur de base (A) est définie par les première et deuxième valeurs de coordonnées xa = 0, respectivement ya = 0, la deuxième valeur de base (E) est définie par les première et deuxième valeurs de coordonnées xe = N, respectivement ye = Z1 et la valeur intermédiaire (Sv) à interpoler est définie, dans la première direction de coordonnées (x), par la première valeur intermédiaire xs = Z2 et

     --les premières et deuxièmes valeurs de coordonnées sont, à chaque fois, supérieures ou égales à 0.

4. Interpolateur selon la revendication 1 ou 2, caractérisé par les caractéristiques suivantes :

   - la valeur d'interpolation recherchée (ys) correspond à une valeur de rapport recherchée R, avec R = Z1 * Z2/N , lorsque :

     -- le système de coordonnées est à deux dimensions et

     -- la première valeur de base (A) est définie par les première et deuxième valeurs de coordonnées xa = - N , respectivement ya = - Z1 , la deuxième valeur de base (E) est définie par les première et deuxième valeurs de coordonnées xe = + N , respectivement ye = + Z1 et la valeur intermédiaire (Sv) à interpoler est définie, dans la première direction de coordonnées (x), par la première valeur intermédiaire xs = + Z2 et

     -- les premières et deuxièmes valeurs de coordonnées sont au moins partiellement négatives.

5. Interpolateur selon la revendication 1 ou 2, caractérisé en ce qu'il est utilisé dans un circuit de commande ou de régulation, en particulier dans un système à logique floue, pour l'affectation de ni variables d'entrée (xs, ys) à une variable de sortie (zm'), par le fait que la caractéristique de commande ou de régulation est définie dans un système de coordonnées à n dimensions au moyen d'une pluralité de valeurs de base (Si), une direction de coordonnées (x, y, z) étant affectée à chacune des n-1 variables d'entrée ( xs, ys) ainsi qu'à la variable de sortie (zm') et les valeurs intermédiaires nécessaires étant interpolées de manière linéaire entre les valeurs de coordonnées des valeurs de base.

6. Interpolateur selon l'une quelconque des revendications 1, 2 ou 5, caractérisé par les caractéristiques suivantes :

   - les n-1 valeurs de coordonnées de la valeur intermédiaire (Sv) à interpoler, qui sont également désignés par variables d'entrée (Vi), sont divisées en groupes pour réaliser, à chaque fois, une interpolation à un faible nombre de dimensions, en particulier une interpolation à trois dimensions, avec les valeurs de coordonnées d'un groupe, les interpolations nécessaires étant réalisées à deux dimensions dans chaque interpolation à un faible nombre de dimensions,
   - les valeurs de sortie de ces interpolations à un faible nombre de dimensions forment des valeurs intermédiaires (Hi) ou des valeurs de base auxiliaires pour les interpolations suivantes à un faible nombre de dimensions et
   - la sortie du dernier interpolateur dans la direction du flux de signaux délivre la valeur de sortie recherchée dans la direction de coordonnées n.

$$ys = \frac{(ye - ya) \cdot (xs - xa)}{(xe - xa)} + ya$$

Fig.1

$$ys = \frac{ye}{xe} \cdot xs$$

$$R = \frac{Z1 \cdot Z2}{N}$$

Fig.2

$$ya = -ye$$
$$xa = -xe$$

$$ys = \frac{ye}{xe} \cdot xs$$

$$R = \frac{Z1 \cdot Z2}{N}$$

Fig.3

11

Fig.4

Fig.5

Fig.6

Fig.8

Fig.7

Fig.9

Fig.10

Fig.11

Fig.12